(19) Europäisches Patentamt / European Patent Office / Office européen des brevets

(11) **EP 1 651 748 B1**

(12) **FASCICULE DE BREVET EUROPEEN**

(45) Date de publication et mention de la délivrance du brevet:
**20.08.2008 Bulletin 2008/34**

(21) Numéro de dépôt: **04767687.9**

(22) Date de dépôt: **15.07.2004**

(51) Int Cl.:
*C12H 1/04* *(2006.01)*     *A23L 2/80* *(2006.01)*
*A23L 3/00* *(2006.01)*

(86) Numéro de dépôt international:
**PCT/FR2004/001863**

(87) Numéro de publication internationale:
**WO 2005/007794 (27.01.2005 Gazette 2005/04)**

(54) **PROCEDE BIOLOGIQUE DE DETOXICATION D'UN MILIEU LIQUIDE ALIMENTAIRE**

BIOLOGISCHES VERFAHREN ZUR ENTGIFTUNG EINES FLÜSSIGEN NAHRUNGSMEDIUMS

BIOLOGICAL METHOD FOR DETOXICATION OF A LIQUID FOOD MEDIUM

(84) Etats contractants désignés:
**AT BE BG CH CY CZ DE DK EE ES FI FR GB GR HU IE IT LI LU MC NL PL PT RO SE SI SK TR**

(30) Priorité: **16.07.2003 FR 0308689**

(43) Date de publication de la demande:
**03.05.2006 Bulletin 2006/18**

(73) Titulaire: **Realdyme**
**28700 Garancières en Beauce (FR)**

(72) Inventeurs:
- **TANGNI, Emmanuel Kossi**
  **B-1348 LOUVAIN-LA-NEUVE (BE)**
- **SIMONIS, Julien**
  **B-1200 BRUXELLES (BE)**
- **LARONDELLE, Yvan**
  **B-1030 BRUXELLES (BE)**
- **DE MEEÛS D'ARGENTEUIL, Ludovic**
  **B-1450 CHASTRE (BE)**

(74) Mandataire: **Goulard, Sophie et al**
**Cabinet ORES**
**36, rue de St Pétersbourg**
**75008 Paris Cedex (FR)**

(56) Documents cités:
GB-A- 688 815          US-A- 4 770 880
US-A1- 2003 170 361

- **PATENT ABSTRACTS OF JAPAN vol. 0091, no. 30 (C-284), 5 juin 1985 (1985-06-05) & JP 60 016933 A (SUNTORY KK), 28 janvier 1985 (1985-01-28)**
- **TSUNEO KADA, MASAYUKI KATO, KATSUHIRO AIKAWA, AND SHUHACHI KIRIYAMA: "Adsorption of pyrolysate mutagens by vegetable fibres" MUTATION RESEARCH, vol. 141, 1984, pages 149-152, XP002270698**
- **HUWIG A ET AL: "Mycotoxin detoxication of animal feed by different adsorbents" TOXICOLOGY LETTERS, ELSEVIER BIOMEDICAL PRESS, AMSTERDAM,, NL, vol. 122, 30 avril 2001 (2001-04-30), pages 179-188, XP002962220 ISSN: 0378-4274**

**Description**

La présente Invention est relative à un procédé biologique de décontamination des mycotoxines présentes dans un produit alimentaire liquide par adsorption de celles-ci sur des fibres végétales insolubles, à un procédé brassicole comportant au moins une étape de décontamination selon ce procédé, ainsi qu'aux produits alimentaires au moins partiellement détoxifiés susceptibles d'être obtenus en mettant en oeuvre un tel procédé.

L'importance de l'innocuité des aliments pour la sécurité alimentaire a été largement reconnue, en particulier par les divers gouvernements qui ont participé en 1992 à la Conférence Internationale sur la Nutrition ("International Conference on Nutrition") qui s'est déroulée à Rome (Italie) et en 1996 au Sommet Mondial sur l'Alimentation ("World Food Summit") de Rome (Italie). La qualité et la sécurité des aliments peuvent être menacées par un grand nombre de facteurs, y compris par la présence de toxines naturelles.

En effet, parmi la longue liste de toxines pouvant naturellement se retrouver dans les produits d'alimentation courante, les mycotoxines représentent une catégorie très importante qui figure parmi les plus étudiées dans la mesure où leur ubiquité et leurs effets néfastes sur la santé humaine et animale provoquent une inquiétude générale (FAO, 1999, "Preventing Mycotoxin contamination", Publication n°23, Rome, Italie, p 55).

Les produits agricoles sont les cibles potentielles de ravageurs et de maladies. Ils portent une flore microbienne variable et nombreuse comprenant principalement des bactéries, des levures et des champignons filamenteux. Leur présence peut notamment provoquer une détérioration de la qualité des produits agricoles, allant parfois jusqu'à leur destruction pure et simple.

Parmi ces microorganismes, les champignons filamenteux sont responsables de la production des mycotoxines, qui s'observe au cours de la croissance des produits agricoles dans les, champs ou bien au cours de leur stockage dans des conditions propices d'humidité et de température. Les principaux genres de champignons (*fungi*) producteurs de mycotoxines sont *Penicillium, Fusarium, Aspergillus* et *Alternaria.*

Les mycotoxines sont des métabolites secondaires de composition chimique très variable, mais en général de faible poids moléculaire. Leurs effets néfastes sur la santé humaine, qu'ils soient aigus ou chroniques, sont aussi très variés. Leurs cibles sont principalement les reins, le foie, le tractus gastro-intestinal et les systèmes nerveux et immunitaires. A ce jour, environ cinq cents mycotoxines ont été découvertes et leur nombre ne cesse d'augmenter au fur et à mesure que la recherche avance. Toutefois, seule une vingtaine sont bien identifiées comme une menace réelle pour la sécurité alimentaire. Parmi les différentes familles de mycotoxines rencontrées dans les produits alimentaires, on peut notamment citer les Aflatoxines (AFLA) composées des aflatoxines $B_1$, $B_2$, $G_1$ et $G_2$, l'Alternariol, la Fumonisine (FB), l'Ochratoxine A (OTA), la Patuline (PAT), les Trichotécènes dont la Vomitoxine, la Stérigmatocystine et la Zéaralénone (ZEA). En fonction de leur nature, ces mycotoxines peuvent avoir des effets néfastes divers sur la santé humaine ou animale ; elles peuvent notamment être hépato et immunotoxiques, carcinogènes, tératogènes, neurotoxiques, néphrotoxiques, ou bien encore entraîner des troubles digestifs ou des hémorragies.

Les principales denrées alimentaires susceptibles d'être contaminées par les mycotoxines sont les céréales, les noix, les fruits secs, le café, le cacao, les épices, les graines oléagineuses, les pois et les fèves, ainsi que les fruits. Leurs produits dérivés peuvent donc être contaminés, suivant la stabilité de la toxine au cours du processus de transformation. Il en résulte que ces mycotoxines, et notamment l'OTA, peuvent être transmises à de nombreux produits de consommation courante tels que le vin, la bière, le pain et les produits dérivés du café et du cacao (Abarca ML. et al., J. Food Prot., 2001, 64(6), 903-906 ; Walker R., Adv. Exp. Med. Biol., 2002, 504, 249-255). Il existe également un risque non négligeable de contamination secondaire *via* différentes denrées d'origine animale telles que la viande, le lait, les oeufs et les fromages (Pittet A., Revue Méd. Vét., 1998, 149, 479-492).

La contamination des produits alimentaires liquides préparés à partir de grains ou de fruits, par les mycotoxines est un sujet d'inquiétude croissant pour les industriels de l'agro-alimentaire et en particulier pour les brasseurs. En effet, l'amélioration des outils de détection et de quantification a permis de mettre en lumière la présence de diverses mycotoxines dans la bière (voir notamment Scott P.M. et al., Food Addit. Contam., 1995, 12(4), 591-598 ; Scott P.M., J. AOAC Int., 1996, 79(4), 875-882) et Scott P.M. et al., J AOAC Int., 1997, 80(6), 1229-34. Au cours du processus brassicole, une certaine dégradation des mycotoxines a lieu mais les données sont variables et lacunaires ; une disparition totale des toxines est rarement atteinte. La présence de mycotoxines, et en particulier d'OTA, dans la bière a été recensée dans de nombreuses études (voir notamment l'article de Nakajima M. et al., J. AOAC Int., 1999, 82, 897-902). Les concentrations trouvées sont généralement faibles et souvent en dessous de la limite proposée de 0,2 $\mu$g d'OTA/1 de bière. Cependant, de fortes concentrations sont parfois détectées et une consommation assidue peut provoquer un dépassement de la dose journalière acceptable (DJA) (Stettner G., 2001, "Nachweis und Verhalten von Deoxynivalenol und Ochratoxin A während der Bierbereitung". Lehrstuhl für Technologie der Brauerei II, Technische Universität München, Deutschland). De plus, un certain nombre de gouvernements, de plus en plus conscients des problèmes liés aux mycotoxines, sont sur le point de légiférer à ce sujet.

Il existe par ailleurs un très grand nombre d'articles s'intéressant à ce problème au niveau planétaire parmi lesquels on peut notamment citer ceux de Wolf-Hall C.E. et al., Adv. Exp. Med. Biol., 2002, 504, 217-226 ; Tangni E.K.

et al., Food Add. Contam., 2002, 19(12), 1169-1179 et Odhav B. et al., Food Add. Contam., 2002, 19(1),55-61.

Les mycotoxines sont des composés très stables et résistants à la majorité des processus de transformation des produits agro-alimentaires. Par conséquent, et compte tenu de leurs effets néfastes sur la santé, il est de la plus grande importance de pouvoir disposer de moyens efficaces permettant :

- soit de prévenir la contamination des produits alimentaires,
- soit de les décontaminer avant et/ou après leur transformation.

La première approche n'est pas toujours réalisable compte tenu des conditions de culture ou de stockage des matières premières. La deuxième approche doit donc être mise en oeuvre au niveau industriel et divers procédés physico-chimiques ou biologiques ont déjà été proposés dans ce sens. Ces procédés de décontamination peuvent être classés en deux grandes catégories :

1) la première catégorie consiste à dégrader les toxines en des produits moins toxiques ou non toxiques afin que leur ingestion soit moins préjudiciable à l'organisme ;
2) la seconde catégorie consiste à utiliser des adsorbants afin de retenir, au moins en partie, les mycotoxines. Ces adsorbants sont soit utilisés au cours de la fabrication des produits alimentaires afin que les produits finis destinés à être consommés contiennent la plus faible quantité possible de mycotoxines résiduelles, soit ajoutés aux aliments consommés pour en diminuer la biodisponibilité. Cette élimination est généralement réalisée au moyen de matériaux aptes à filtrer ou à adsorber les mycotoxines de façon à en diminuer la disponibilité.

Parmi les documents de l'art antérieur décrivant des procédés de filtration, on peut notamment citer le brevet américain US 5,248,382 qui décrit une méthode pour réduire le taux de mycotoxines dans les jus de fruits, et en particulier le taux de patuline, au moyen d'une filtration sur une résine microporeuse capable de retenir la patuline par chémisorption et dans laquelle le diamètre des pores est inférieur à 20 Angström. Bien qu'efficace, cette méthode présente l'inconvénient de mettre en oeuvre un matériel spécifique et coûteux.

Dans les nombreux documents de l'art antérieur décrivant des procédés appartenant à cette seconde catégorie, les mycotoxines sont éliminées par l'action d'adsorbants généralement inorganiques tels que les phyllosilicates comme les argiles et les aluminosilicates sodiocalciques hydratés (HCSAS), les charbons actifs et certains polymères spéciaux. Dans ce domaine, on peut notamment faire référence :

- à la demande de brevet allemand DE 3 810 004 concernant l'utilisation de bentonites ;
- à l'article de Arimoto-Kobayashi S *et al.,* Mutat. Res., 1997, **381**(2), 243-249 divulguant la capacité détoxifiante d'un matériel mixte à base de chlorophylle, de polyglucosamine et de chitosan vis-à-vis de l'aflatoxine ;
- à la demande internationale WO 02/052950 concernant l'utilisation d'une poudre adsorbante à base de zéolite renfermant plus de 80 % d'un mélange de clinoptilotite et d'heulandite et un composé ammonium quaternaire à chaîne grasse ; et
- à la demande internationale WO 02/40150 qui décrit l'utilisation de silicates lamellaires activés par de l'acide pour l'adsorption des mycotoxines.

Il existe aussi des méthodes mettant en oeuvre des procédés de décontamination biologique. Dans ce domaine, on peut notamment citer la demande internationale WO 98/34503 qui décrit une méthode de traitement de produits biologiques contaminés par des mycotoxines dans laquelle le produit contaminé est mis en contact avec des bactéries lactiques ou propioniques.

Le document EP-A-0124891 décrit un procédé de décontamination biologique à base d'extraits solubles du germe de blé, de malt d'orge, de soja ou de son de riz.

L'ensemble de ces procédés ne peut cependant pas toujours être utilisé pour la détoxication des produits alimentaires au niveau industriel dans la mesure où ils ne sont pas en totale adéquation avec les impératifs de coût, de conservation des propriétés de l'aliment et d'innocuité des produits de dégradation générés au cours de ces procédés. Par ailleurs, les adsorbants actuellement disponibles sur le marché peuvent causer une certaine perte de nutriments au sein du produit alimentaire final ou bien leur mauvaise utilisation métabolique.

Il existe donc un réel besoin de mise au point d'un procédé de détoxication directement applicable aux produits alimentaires liquides issus de grains ou de fruits notamment et en particulier au processus brassicole.

Les Inventeurs se sont donnés pour but de pourvoir à un procédé biologique de détoxication de milieux alimentaires liquides permettant de remédier à l'ensemble de ces inconvénients, et qui soit facilement et directement applicable à la détoxication de produits alimentaires et en particulier à la bière.

A cette occasion, les Inventeurs ont mis en évidence, de façon surprenante, que l'adsorption des mycotoxines sur des fibres végétales insolubles permet de décontaminer des milieux alimentaires liquides et par voie de conséquence d'éliminer de façon significative les mycotoxines susceptibles d'être présentes dans les produits alimentaires en dérivant.

Ce phénomène est à la base de la présente Invention.

La présente Invention a donc pour objet un procédé biologique de décontamination des mycotoxines dans un milieu alimentaire liquide, comprenant au moins les étapes suivantes :

- l'adsorption d'au moins une partie des mycotoxines présentes dans le milieu alimentaire liquide à décontaminer par mise en contact dudit milieu avec des fibres végétales insolubles micronisées, et
- l'élimination desdites fibres sur lesquelles les mycotoxines sont adsorbées.

Le procédé biologique conforme à la présente Invention est basé sur l'effet adsorbant des fibres végétales insolubles micronisées vis-à-vis des mycotoxines. Il apporte une solution particulièrement efficace et facile à mettre en oeuvre à moindre coût pour la décontamination en mycotoxines des produits alimentaires liquides et ce généralement sans modification majeure des procédés de fabrication habituellement utilisés. Il est en outre avantageusement directement utilisable au cours du processus brassicole pour lequel il présente notamment l'avantage de faciliter l'étape de filtration et d'améliorer la stabilité de la mousse.

Selon une forme de réalisation avantageuse du procédé conforme à l'Invention, les fibres végétales insolubles sont choisies parmi les fibres issues :

- de végétaux alimentaires tels que les céréales, les légumineuses, les plantes potagères, les fruits y compris tropicaux, et plus généralement toute plante utilisée à des fins alimentaires,
- de végétaux utilisés par l'industrie du papier tels que les arbres, la canne à sucre, le bambou et la paille de céréale.

Parmi les fibres issues de céréales, on peut en particulier citer les fibres de blé, d'orge, d'avoine, de maïs, de millet, de riz, de seigle, de sorgho, et leurs équivalents maltés.

Selon l'invention, on entend par équivalent malté les grains germés dont la germination a été stoppée par un traitement thermique, puis débarrassés de leurs germes.

Parmi les fibres issues de végétaux alimentaires autres que les céréales, on peut notamment citer les fibres issues des pommes, des poires, des grains de raisins, des graines de lupin et de soja, des tomates, des pois, du café, etc.

Parmi les fibres de céréales, on préfère tout particulièrement :

- les isolats de fibres de blé vendus sous la dénomination commerciale Adfimax® 95, et en particulier l'Adfimax® 95 "y" et l'Adfimax® 95 ;
- les fibres de blé micronisées vendues sous les dénominations commerciales Adfimax® 48 et Adfimax® BW ;
- les fibres d'orges micronisées vendues sous la dénomination commerciale Adfimax® 76, et en particulier l'Adfimax® 76 et l'Adfimax® 76 "m" (medium) ;
- les fibres d'avoine micronisées vendues sous la dénomination commerciale Adfimax® 82 ;
- les fibres de pommes micronisées vendues sous la dénomination commerciale Adfimax® 75 ;
- les fibres de raisin micronisées vendues sous les dénominations commerciales Adfimax® 59 (fibres de pulpe) et Adfimax® 64 (fibres de pépins) ;
- les fibres de pois micronisées vendues sous les dénominations commerciales Adfimax® 90 et Adfimax® 56 ;
- les fibres de lupin micronisées vendues sous la dénomination commerciale Adfimax® 84 ;
- les fibres de soja micronisées vendues sous la dénomination commerciale Adfimax® 80 ;

toutes ces fibres étant disponibles auprès de la société REALDYME (28700 Garancières en Beauce, France).

Selon une forme de réalisation avantageuse et astucieuse de l'Invention, la ou les fibres végétales utilisées sont choisies en fonction de la nature des milieux alimentaires liquides à décontaminer, c'est-à-dire parmi les fibres de la même origine que celle des produits entrant dans la composition de base des milieux à décontaminer. On pourra par exemple utiliser de préférence des fibres de pommes pour la décontamination des jus de pommes ou bien des fibres d'orge pour la décontamination de la bière.

La nature des fibres utilisées conformément au procédé de l'Invention peut également être choisie en fonction de la nature de la ou des mycotoxines susceptibles d'être présentes dans le milieu alimentaire liquide à décontaminer.

Ainsi, en ce qui concerne l'adsorption de l'OTA, on utilisera de préférence les produits Adfimax® 95, Adfimax® 82, Adfimax® BW, Adfimax® 75, ou leurs mélanges.

En ce qui concerne l'adsorption du déoxynivalénol (DON), on utilisera de préférence l'Adfimax® 95, Adfimax® 48, Adfimax® 90, ou leurs mélanges.

En ce qui concerne la FB, on utilisera de préférence l'Adfimax® 82.

En ce qui concerne l'adsorption des aflatoxines, et en particulier de l'aflatoxine B1 (AFB1), on utilisera de préférence l'Adfimax® 82.

Selon une forme de réalisation particulièrement avantageuse du procédé conforme à l'Invention, les fibres végétales sont choisies parmi les fibres micronisées. Les Inventeurs ont en effet constaté que l'utilisation de fibres végétales micronisées permettait d'augmenter de façon très significative la quantité de mycotoxines adsorbée par gramme de fibres par rapport à la quantité de mycotoxines adsorbées sur des fibres végétales non micronisées.

La micronisation est un procédé qui permet de réduire la taille des particules. Ainsi, selon cette forme de réalisation particulière, les fibres végétales se présentent alors de préférence sous la forme de microparticules dont au moins 90 % de la masse totale des microparticules présentent une taille inférieure ou égale à 700 $\mu$m et encore plus préférentiellement dont au moins 90 % de la masse totale des microparticules présentent une taille inférieure ou égale à 200 $\mu$m ; la granulométrie étant mesurée par tamisage sur un tamis A 200 LS Air Jet Sieve commercialisé par la société Alpine (Augsburg, Allemagne). De telles fibres peuvent notamment être préparées selon le procédé décrit dans la demande de brevet FR 2 433 910.

Selon l'Invention, on préfère tout particulièrement utiliser des fibres telles que l'Adfimax® BW, qui sont des fibres de blé micronisées sous forme de microparticules dont au moins 90 % de la masse totale des particules présentent une taille inférieure ou égale à 200 $\mu$m.

Par ailleurs, et afin d'éviter toute absorption du milieu par les fibres lors de leur mise en contact avec le milieu alimentaire liquide à décontaminer, le procédé conforme à l'Invention comprend en outre de préférence une étape préliminaire au cours de laquelle les fibres sont hydratées. Cette hydratation préalable des fibres n'affecte pas de manière significative leur potentiel d'adsorption vis-à-vis des mycotoxines.

Selon le procédé conforme à l'Invention, la quantité de fibres végétales introduite dans le milieu liquide à décontaminer est de préférence comprise entre 0,1 et 20 % et encore plus préférentiellement entre 0,5 et 5 %, ces pourcentages étant exprimés en poids de fibres (avant hydratation éventuelle) par litre de milieu.

La mise en contact du milieu alimentaire avec les fibres végétales est de préférence réalisée pendant une durée pouvant varier entre quelques secondes et 90 minutes, plus préférentiellement entre 5 et 45 minutes. Les Inventeurs ont en effet constaté que le phénomène d'adsorption se produit très rapidement et est irréversible à température constante au moins pendant 48 heures.

Le pH du milieu alimentaire liquide n'est pas critique selon l'Invention, cependant la mise en contact avec les fibres végétales est de préférence réalisée à un pH acide compris entre 1,5 et 7. Lorsque le procédé conforme à l'invention est intégré à un processus brassicole, le pH du milieu alimentaire liquide est de préférence compris entre 5,2 et 5,4.

Par ailleurs, en ce qui concerne l'adsorption de l'OTA, les Inventeurs ont mis en évidence de façon surprenante que le pourcentage de mycotoxines retiré du milieu pour une quantité donnée de fibres végétales insolubles, et en particulier de fibres Adfimax® BW, est multiplié par deux environ lorsque le pH du milieu passe d'une valeur de 6 environ à une valeur de 2,5 environ.

Le pH du milieu peut naturellement être ajusté à la valeur désirée au moyen d'agents alcalinisants ou acidifiants tels que ceux habituellement utilisés dans l'industrie agro-alimentaire.

Bien qu'elle ne soit pas critique non plus, la température du milieu à décontaminer peut également avoir une influence sur la quantité de mycotoxines adsorbée pour une quantité donnée de fibres, cette quantité ayant généralement tendance à diminuer au fur et à mesure que la température augmente. Ainsi, selon une forme de réalisation avantageuse du procédé conforme à l'Invention, le milieu est maintenu à une température comprise entre 7 et 80°C environ et de préférence entre 20 et 30°C environ pendant toute la durée de la mise en contact.

Parmi les différents milieux alimentaires liquides pouvant être décontaminés selon le procédé conforme à l'Invention, on peut notamment citer la bière, les mélanges de malt et d'eau et la maische des processus brassicoles, le vin, le café, les jus de fruits, le lait et les sirops de glucose.

L'élimination des fibres à la fin de la période de mise en contact est de préférence réalisée par filtration selon les techniques connues et habituellement utilisées par l'Homme de l'art à cet effet.

Selon une variante de l'Invention, les étapes de mise en contact du milieu alimentaire liquide à décontaminer avec les fibres végétales insolubles d'une part et d'élimination desdites fibres sur lesquelles les mycotoxines sont adsorbées d'autre part peuvent être réalisées simultanément. Dans ce cas, l'étape d'élimination des fibres est généralement une étape de filtration et les fibres végétales insolubles peuvent alors par exemple faire partie intégrante d'un système de filtration, et en particulier se présenter sous la forme d'un adjuvant de filtration.

Le procédé de décontamination conforme à l'Invention et tel qu'il vient d'être décrit ci-dessus présente l'avantage de pouvoir être directement intégré au processus brassicole sans qu'il ne soit nécessaire d'en modifier significativement les étapes.

Celui-ci fait intervenir principalement trois ingrédients qui sont le malt d'orge, l'eau et le houblon. La fabrication peut se faire de différentes manières bien connues de l'homme de l'art, mais on peut généralement distinguer quelques grandes étapes qui sont :

- le maltage qui comprend la germination des grains préalablement trempés,
- le brassage proprement dit qui représente la mise en solution des matières solubles du malt déjà partiellement dégradés par la germination et des grains crus, et qui conduit à l'obtention d'une maische,
- la filtration de la maische,
- l'ébullition : le filtrat (également dénommé moût), est ensuite porté à ébullition pendant des durées variables puis refroidi,
- la fermentation du moût et son inoculation au moyen de levures,
- la garde : c'est le temps de maturation de la bière variable selon les bières,
- la filtration : après sa période de garde, la bière est à nouveau filtrée avant d'être soutirée et conditionnée.

Ainsi, l'Invention a donc également pour objet l'utilisation du procédé de décontamination en mycotoxines conforme à l'Invention pour la détoxication de la bière au cours d'un procédé brassicole, ledit procédé brassicole faisant intervenir au moins une opération de filtration.

Cette application particulière du procédé conforme à l'Invention permet non seulement de décontaminer la bière en mycotoxines mais présente les avantages supplémentaires :

- d'améliorer la qualité des filtrations, en particulier celle de la maische, compte tenu de l'augmentation de la teneur en fibres dans le gâteau de filtration ;
- d'améliorer la stabilité de la mousse et
- de faciliter la clarification du moût au cours de la filtration et de la clarification.

L'Invention a donc pour objet un procédé brassicole comprenant au moins une étape de brassage et au moins une étape de fermentation d'un moût, caractérisé par le fait qu'il comporte en outre au moins une étape de décontamination en mycotoxines selon le procédé décrit précédemment, ladite étape de décontamination ayant lieu simultanément à l'étape de brassage et/ou après l'étape de fermentation et éventuellement de maturation du moût.

Selon une première forme de réalisation de ce procédé, l'étape de décontamination est réalisée simultanément à l'étape de brassage, par mise en contact d'un mélange de malt moulu et d'eau avec des fibres végétales insolubles, de préférence hydratées, l'élimination desdites fibres sur lesquelles les mycotoxines sont alors adsorbées étant réalisée par l'étape de filtration de la maische.

Dans ce cas, les fibres végétales sont de préférence introduites à raison de 0,5 à 20 % en poids environ par rapport au poids de malt.

Selon une deuxième forme de réalisation de ce procédé, l'étape de mise en contact du milieu liquide à décontaminer est réalisée avant l'étape de filtration d'un moût fermenté et éventuellement maturé, par mise en contact de ce moût avec des fibres végétales insolubles, de préférence hydratées, l'élimination desdites fibres sur lesquelles les mycotoxines sont alors adsorbées étant réalisée par l'étape de filtration du moût fermenté (bière).

Dans ce cas, les fibres végétales sont de préférence introduites dans le moût fermenté à raison de 0,05 à 5 % en poids environ par rapport au poids total du moût.

Enfin, l'Invention a pour objet les produits alimentaires au moins partiellement décontaminés en mycotoxines susceptibles d'être obtenus par la mise en oeuvre du procédé de décontamination conforme à l'Invention et plus particulièrement les produits alimentaires liquides décontaminés tels que la bière et les jus de fruits, ainsi que les produits alimentaires solides décontaminés tels que les poudres lyophilisées comme par exemple le café, ou bien encore les produits laitiers tels que les yaourts et les fromages.

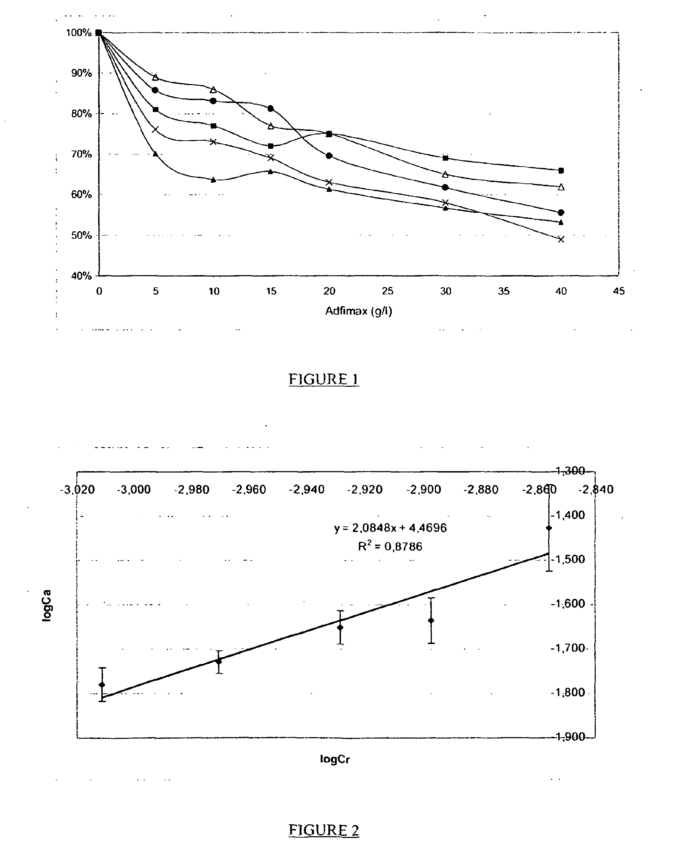

Outre les dispositions qui précèdent, l'Invention comprend encore d'autres dispositions qui ressortiront de la description qui va suivre, qui se réfère à un exemple de mise en évidence des propriétés d'adsorption d'OTA par des fibres végétales insolubles et criblage préliminaire de différentes fibres végétales, à un exemple de mise en évidence de l'adsorption d'OTA dans un moût brassicole, à un exemple d'étude de l'effet de la température sur l'adsorption d'OTA dans un milieu liquide modèle, à une étude de l'impact de l'addition de fibres végétales insolubles sur le brassage en microbrassin, à une étude de l'effet du pH sur l'adsorption des mycotoxines par des fibres de blé, à un exemple de mise en évidence de l'adsorption de l'OTA sur des fibres végétales dans du jus de raisin, à un exemple de mise en évidence de l'adsorption des aflatoxines B1 par des fibres végétales insolubles, à une étude de l'impact de la micronisation de différentes fibres végétales insolubles sur la quantité d'aflatoxines B1 adsorbée, à une étude de l'effet dose-réponse de l'adsorption de l'aflatoxine B1 par des fibres de blé micronisées ou non micronisées, à un exemple concernant l'adsorption de l'OTA au cours d'un processus brassicole pilote, à un exemple d'adsorption de l'OTA dans un milieu modèle par des fibres de raisin ; ainsi qu'aux figures 1 à 8 annexées dans lesquelles :

- la figure 1 représente l'évolution de l'adsorption d'OTA par cinq fibres différentes (Adfimax® 95 y ; Adfimax® 95 ; Adfimax® BW ; Adfimax® 76 et Adfimax® 76 m) en milieu liquide modèle contenant une concentration initiale de 30 ng d'OTA/ml pour un volume initial de 25 ml et une durée de la mise en contact de 45 minutes en fonction de la quantité de fibres en grammes par litre de milieu ;
- la figure 2 représente la modélisation du phénomène d'adsorption suivant la théorie de Freundlich, soit le log de la concentration en OTA adsorbée par de l'Adfimax® BW en fonction du log de la concentration en OTA résiduelle dans le surnageant. Ceci permet d'estimer la capacité d'adsorption de l'OTA et l'affinité de l'Adfimax® BW à une température de 25°C ;

- la figure 3 représente la quantité d'OTA (ng) adsorbée par gramme de fibres Adfimax® BW en fonction de la concentration initiale du milieu en OTA en ng/ml ;
- la figure 4 représente l'effet de la température sur l'adsorption d'OTA par des fibres Adfimax® BW ; sur cette figure, les barres noires représentent la diminution de la concentration de l'OTA (en %) dans le milieu lors de la mise en contact directe, à différentes températures, des fibres avec le milieu contaminé ;
- la figure 5 représente la quantité de filtrat récupérée (ml) en fonction du temps (minutes) pour différentes doses d'Adfimax® BW ajoutées à un mélange de malt et d'eau au cours d'un processus brassicole ;
- la figure 6 représente l'évolution de l'adsorption d'OTA (diminution de la quantité d'OTA en pourcentage de la quantité initialement présente) dans un milieu liquide modèle par des fibres Adfimax® BW en fonction des variations de pH ;
- la figure 7 représente la différence (en %) de la quantité d'Aflatoxine B1 adsorbée (en ppb) entre la forme micronisée et non micronisée ou medium des fibres de même origine et montre que la quantité de mycotoxines adsorbée est liée à la taille des particules ;
- la figure 8 représente la quantité d'AFB1 adsorbée, exprimée en pourcentage de la quantité d'AFB1 initialement présente dans un milieu modèle, en fonction de quantité de fibres utilisées (en % pondéral) ; (carré noirs : fibres de blé micronisées et losanges noirs : fibres de blé non micronisées).

## EXEMPLE 1 : MISE EN EVIDENCE DES PROPRIETES D'ADSORPTION D'OTA PAR DES FIBRES VEGETALES INSOLUBLES ET CRIBLAGE PRELIMINAIRE DE DIFFERENTES FIBRES VEGETALES

De façon surprenante, les Inventeurs ont mis en évidence que l'incorporation de fibres végétales dans un milieu liquide modèle permet, par l'adsorption de l'OTA sur les fibres, de diminuer la quantité de toxine disponible dans ce milieu. Les tests *in vitro* reportés dans cet exemple ont été réalisés afin de démontrer les propriétés d'adsorption des fibres végétales micronisées lorsqu'elles sont incorporées dans un milieu liquide contaminé en OTA et afin de déterminer quel est le temps de mise en contact nécessaire à une adsorption optimale de l'OTA par ces fibres. Ensuite, un criblage de cinq fibres végétales différentes a été réalisé afin de déterminer quelles étaient les fibres les plus performantes vis-à-vis de l'adsorption de l'OTA. Chacune des fibres micronisées utilisées a été testée par rapport aux fibres non micronisées correspondantes.

### 1) Protocole expérimental

Une quantité déterminée de fibres végétales (environ 20 g/l) est mélangée dans un tube stérile de 50 ml avec 25 ml d'une solution aqueuse renfermant 2 % de Dextrose (vendu sous la dénomination commerciale D(+) glucose monohydraté par la société Merck), 5 % d'extrait de levures (vendu sous la dénomination commerciale Extrait de levures en Poudre par la société ICN Biomedical) et 1 % de peptone (vendu sous la dénomination Peptone par la société Duchefa), préalablement stérilisée à 121°C pendant 15 minutes. Cette solution aqueuse présente un pH compris entre 6,0 et 6,2 et est dénommée "DYP" dans ce qui suit (milieu modèle). La solution DYP est ensuite contaminée par une quantité variable d'une solution d'OTA dans l'éthanol. La concentration d'OTA dans le milieu liquide modèle est de 57 ng/ml. Le contenu du tube est ensuite homogénéisé par agitation manuelle pendant 30 secondes, puis le tube est placé à agiter à 90 tours par minute (tpm) dans une chambre thermostatée à 25°C pendant 45 minutes. Un traitement contrôle sans adsorbant (témoin), c'est-à-dire sans fibre végétale, est effectué pour chaque expérience, et chacune de ces expériences est réalisée trois fois.

La suspension est ensuite centrifugée à 1830 g pendant 10 minutes à une température de 25°C puis le culot est séparé du surnageant. On extrait ensuite 1 ml de surnageant dans un tube stérile par 9 ml d'une solution de méthanol : eau (50 : 50 ; v/v). Le tube est ensuite vortexé pendant 30 secondes, puis centrifugé pendant 10 minutes à 820 g à une température comprise entre 5 et 10°C. Cet extrait est ensuite dilué, filtré et analysé par chromatographie liquide haute performance (HPLC).

Le système HPLC consiste en une pompe à régime isocratique Perkin Elmer® LC049 vendue par la société Norwalk (USA) avec une boucle d'injection de 50 $\mu$l vendue sous la dénomination Rheodyne® par la société Cotati (USA), équipée d'une colonne $C_{18}$ d'une longueur de 150 mm et d'un diamètre de 4 mm vendue sous la dénomination Hypersil® BDS, d'une porosité de 3 $\mu$m, vendue par la société Tracer Analytica (Espagne), d'un détecteur à fluorescence RF 551 vendu par la société Shimadzu (Japon) muni d'une lampe xénon d'une puissance de 150 W réglé à une longueur d'onde d'excitation ($\lambda_{excitation}$) de 332 nm et à une longueur d'onde d'émission ($\lambda_{émission}$) de 462 nm, d'un intégrateur SP4290 vendu par la société Spectra Physics (USA). La phase mobile est composée d'un mélange acétonitrile/eau/ acide acétique (450/540/10 ; v/v) filtré sur membrane de 0,25 $\mu$m et dégazée à l'hélium pendant 15 minutes. Le débit de la phase liquide est fixé à 1 ml/mn à une pression comprise entre 2900 et 3000 psi.

La quantité d'OTA totale adsorbée est obtenue par différence entre la quantité initiale et finale présente dans le surnageant.

Dans cet exemple, les fibres suivantes ont été utilisées : Adfimax® 95 y, Adfimax® 95, Adfimax® BW, Adfimax® 76, et Adfimax® 76 m, et ce à différents dosages ;

## 2) Résultats

Les résultats obtenus sont reportés dans les tableaux 1 à IV ci-après ainsi que sur la figure 1 annexée.

Les pourcentages d'OTA adsorbées sur l'Adfimax® BW en fonction de la durée de la mise en contact, avec le milieu modèle contenant 57 $\mu$g/l d'OTA, à un pH compris entre 6,0 et 6,2 sont reportés dans le Tableau I ci-après :

### TABLEAU 1

| | Diminution de la concentration en OTA (%) | | |
| --- | --- | --- | --- |
| | Durée de la période de mise en contact (heures) | | |
| Quantité d'Adfimax® BW (g/l) | 3 | 24 | 48 |
| 0 (Contrôle) | 0 | 0 | 0 |
| 10 | 46,7 | 52,5 | 49,8 |
| 16 | 59,8 | 65,3 | 61,6 |
| 20 | 68,9 | 69,7 | 71,7 |
| 30 | 68,0 | 72,3 | 73,6 |

Ces résultats montrent que l'adsorption des fibres ne varie pas entre 3 et 24 heures. Par ailleurs, la quantité d'OTA adsorbée augmente en fonction de la quantité de fibres présentes dans le milieu.

Les effets de durées de mise en contact inférieures à 24 heures sur le taux d'adsorption d'OTA (en %) par les fibres (20 g de fibres Adfimax® BW par litre de milieu liquide modèle à pH 5,2 contenant 35 ng d'OTA/ml) sont reportés dans le Tableau II ci-après :

### TABLEAU II

| Durée de la mise en contact (en minutes) | % d'OTA adsorbé |
| --- | --- |
| 0 | 0 |
| 5 | 21 |
| 15 | 20 |
| 45 | 25 |
| 90 | 29 |
| 169 | 28 |
| 360 | 30 |
| 1440 | 43 |

Ces résultats montrent que l'adsorption se produit très rapidement (entre 5 et 45 minutes environ) et que celle-ci se maintient au moins pendant toute la durée de l'expérience.

Les effets de la micronisation sur la quantité d'OTA adsorbée par des fibres Adfimax® BW et leur matière première non-micronisée sont reportés dans le Tableau III ci-après :

**TABLEAU III**

| Quantité de fibres (g/l) | Quantité d'OTA adsorbée (%) | |
| --- | --- | --- |
| | Matière première non micronisées | (Adfimax® BW |
| 20 | 17% | 33% |
| 30 | 22% | 37% |

Ces résultats montrent que la micronisation permet d'améliorer les propriétés d'adsorption des fibres.

La figure 1 annexée représente les quantités d'OTA respectivement adsorbées par cinq fibres différentes (Adfimax® 95 y : triangles pleins ; Adfimax® 95 : carrés pleins ; Adfimax® BW : croix ; Adfimax® 76 : ronds pleins et Adfimax® 76 m : triangles vides) en milieu DYP contenant une concentration initiale de 30 ng d'OTA/ml pour un volume initial de 25 ml et une durée de mise en contact de 45 minutes. Sur cette figure, le pourcentage d'OTA résiduelle est exprimé, pour chaque fibre, en fonction de la quantité de fibres en grammes par litre de milieu DYP.

Les résultats représentés sur la figure 1 montrent que même à des concentrations aussi faibles que 5 g de fibres par litre de milieu, on observe une bonne adsorption de l'OTA, en particulier avec l'Adfimax® 95 y.

### EXEMPLE 2 : MISE EN EVIDENCE DE L'ADSORPTION DE L'OTA DANS UN MOUT BRASSICOLE

Une quantité déterminée de fibres Adfimax® BW (20 g/l) est mélangée avec 47 ml de moût clarifié contaminé par 1,5 $\mu$g d'OTA/l. Le contenu du tube est ensuite homogénéisé par agitation manuelle pendant 30 secondes, puis le tube est placé à agiter à 90 tours par minute (tpm) dans une chambre thermostatée à 25°C pendant 45 minutes. Un traitement contrôle sans adsorbant (témoin), c'est-à-dire sans fibre végétale, est également réalisé pour chaque expérience afin de vérifier l'éventuelle disparition spontanée d'OTA. Chaque essai a été réalisé en triple.

La suspension est ensuite centrifugée à 1830 g pendant 10 minutes à une température de 25°C puis le culot est séparé du surnageant et extrait de la façon suivante : 20 ml de surnageant est dilué avec 2,5 ml d'eau contenant 4 % en poids de bicarbonate de sodium et 7,5 ml de tampon phosphate (PBS). Le mélange est ensuite centrifugé pendant 10 minutes à 820 g à une température comprise entre 5 et 10°C. 22,5 ml du surnageant est ensuite injecté dans une colonne d'immunoaffinité vendue sous la dénomination OchraTest® par la société Vicam à raison de 1 à 2 ml/minute, ladite colonne ayant préalablement été conditionnée par 20 ml d'une solution de PBS. La colonne est ensuite rincée par 10 ml d'eau puis éluée au méthanol (2 ml) puis à l'eau (2 ml). 20 ml d'air atmosphérique sont ensuite passés sur la colonne pour collecter tout l'éluat qui est ensuite filtré sur un filtre dont le diamètre des pores est de 0,45 $\mu$m puis analysé par HPLC selon le protocole décrit ci-dessus à l'exemple 1.

Les valeurs d'adsorption sont ensuite comparées à l'isotherme empirique de Freundlich qui est donné par l'équation (I) suivante :

$$C_a = k * C_r^{n} \qquad (I)$$

dans laquelle :

- $C_a$ est la quantité d'OTA adsorbée par unité de poids d'adsorbant ($\mu$g/g) ;
- $C_r$ est la concentration d'OTA non adsorbée à l'équilibre ($\mu$g/ml) ;
- k est une constante relative à la capacité d'adsorption de l'adsorbant pour l'OTA et
- n est une constante relative à l'affinité de l'adsorbant pour l'OTA.

Les courbes de régression linéaire ont été calculées entre les valeurs logarithmiques de $C_a$ et de $C_r$ et un coefficient de corrélation $R^2$ a été utilisé pour vérifier la validité de la courbe.

Afin d'évaluer la cinétique du phénomène d'adsorption observé, une expérience est menée au cours de laquelle une quantité de fibres correspondant à une proportion de 11 g/l est mise en contact avec du moût préalablement contaminé à des doses croissantes d'OTA (de 0 à 2,5 ng/ml). L'analyse de l'adsorption de l'OTA est effectuée comme décrit ci-dessus.

## 2) <u>Résultats</u>

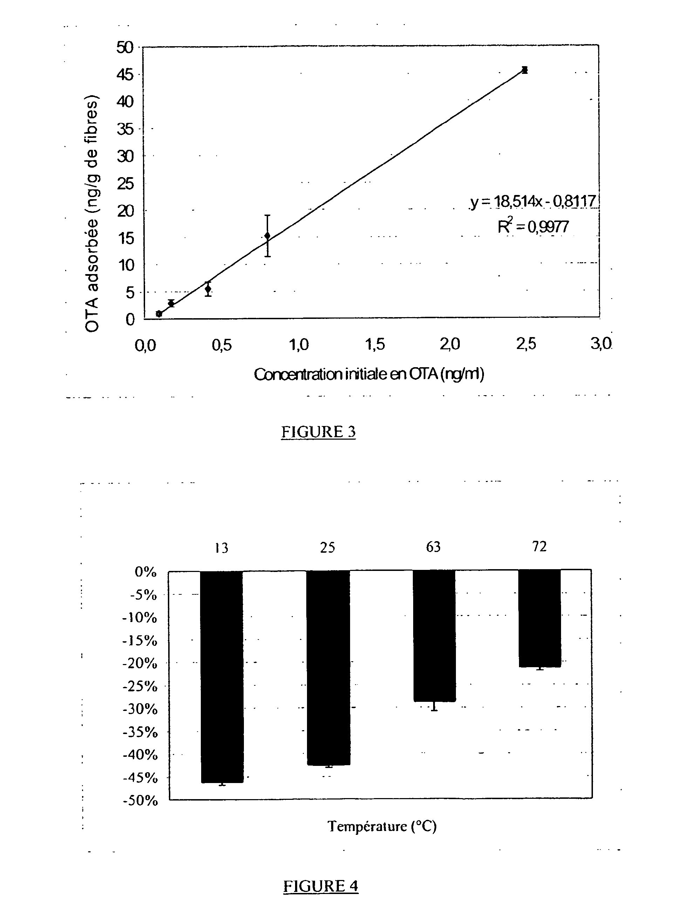

Les résultats obtenus sont reportés dans le tableau IV ci-après ainsi que sur les figures 2 et 3 annexées.

La figure 2 représente l'isotherme de Freundlich du log de la quantité d'OTA adsorbée par unité de poids d'Adfimax® BW en fonction du log de la concentration en OTA résiduelle dans le surnageant. Ceci permet d'estimer la capacité d'adsorption de l'OTA et l'affinité de l'Adfimax® BW à une température de 25°C.

La figure 3 représente la quantité d'OTA (ng) adsorbée par gramme de fibres Adfimax® BW en fonction de la concentration initiale du milieu en OTA en ng/ml.

### TABLEAU IV

| Quantité de fibres (g/l) | Quantité d'OTA adsorbée (%) |
|---|---|
| 1 | 6±3 |
| 5 | 12±3 |
| 15 | 22±3 |
| 20 | 28±2 |
| 30 | 35±2 |
| 40 | 41±4 |

Ces résultats montrent que les fibres Adfimax® BW sont capables d'adsorber l'OTA dans le moût brassicole. Ils montrent également que la quantité d'OTA adsorbée augmente avec la quantité de fibres présente dans le moût brassicole. Par ailleurs, le modèle empirique de Freundlich représenté sur la figure 2 correspond aux valeurs expérimentales de l'adsorption d'OTA par les fibres Adfimax® BW avec un coefficient de relation $R^2$ de 0,8786. La capacité d'adsorption des fibres, calculée par la constante d'adsorption de Freundlich, était de 29,5 mg d'OTA/g de fibres et la constante d'affinité de 2,08 ml/g de fibres.

Enfin, les résultats représentés sur la figure 3 montrent que la relation entre la quantité d'OTA adsorbée par gramme de fibres et la quantité d'OTA initialement présente dans le milieu à décontaminer est linéaire.

A titre comparatif, les phyllosilicates, les terres de diatomées, la bentonite, l'aluminosilicate HSCAS et la cholétéramine, connus pour leur propriété adsorbantes vis-à-vis des mycotoxines et testés dans les mêmes conditions ont respectivement donné les capacités d'adsorption suivantes : 0,3 à 0,44 ; 0,5 à 1,5 ; 1,5-9,0 ; 2,2 et 9,6 mg/g. Ces valeurs sont plus faibles que celles obtenues avec les fibres Adfimax® BW.

## <u>EXEMPLE 3 : EFFET DE LA TEMPERATURE SUR L'ADSORPTION D'OTA DANS UN MILIEU LIQUIDE MODELE</u>

Selon le procédé conforme à l'Invention, et tel que décrit précédemment, il a été indiqué que la décontamination de la bière au moyen de fibres végétales insolubles peut être réalisée sans modification majeure du processus brassicole et en particulier simultanément à l'étape de brassage, lors du mélange du malt moulu et de l'eau. Etant donné que ce mélange est ensuite porté à des températures allant jusqu'à 78°C, il est important de démontrer que l'adsorption a bien lieu à de telles températures.

### 1) <u>Protocole expérimental</u>

Le milieu modèle synthétique DYP contaminé est préalablement traité de la même manière que dans l'exemple 1 ci-dessus.

Afin d'étudier l'effet de la température sur l'adsorption de l'OTA par les fibres, le milieu DYP contaminé est porté à des températures de 12, 25, 63 et 72 °C pendant 10 à 15 minutes avant l'introduction des fibres Adfimax® BW. Une mise en contact de 45 minutes est ensuite réalisée à chacune de ces températures dans un bain-marie thermostaté. A chaque température, l'OTA adsorbée sur les fibres est quantifiée.

La séparation, l'extraction, la purification et l'analyse de la quantité d'OTA sont effectuées selon le protocole décrit ci-dessus à l'exemple 1.

### 2) <u>Résultats</u>

Les résultats obtenus, c'est-à-dire l'effet de la température sur l'adsorption d'OTA par des fibres Adfimax® BW, sont représentés sur la figure 4 annexée.

Sur cette figure, les barres noires représentent l'adsorption d'OTA (en %) lors de la mise en contact directe des fibres avec le milieu contaminé et ce à chacune des températures testées (adsorption directe).

Ces résultats montrent qu'une hausse de température provoque une diminution de l'adsorption de l'OTA sur les fibres.

## EXEMPLE 4 ETUDE DE L'IMPACT DE L'ADDITION DE FIBRES VEGETALES INSOLUBLES SUR LE BRASSAGE EN MICROBRASSIN

Le but de cet exemple est de vérifier que l'introduction de fibres végétales insolubles dans du malt n'a pas d'impact négatif sur le brassage.

### 1) Protocole expérimental

100 grammes de malt sont pesés dans un cylindre dont la tare est connue et y sont mélangés avec 350 ml d'eau "osmose inverse" (OI) à 63°C. Dans différents cylindres sont ajoutés différentes quantités de fibres Adfimax® BW préalablement saturées en OI, afin d'y obtenir les proportions de 0,5 ; 1 ; 2 ; 5 ; 10 et 15% de fibres. Le contenu des cylindres est ensuite soigneusement mélangé puis les cylindres sont insérés dans un bain-marie thermostaté à 63°C, chacun étant surmonté d'un agitateur. Le diagramme de température est le suivant : 30 minutes à 63°C, 20 minutes à 72°C et 1 minute à 78°C. Les cylindres sont ensuite retirés du bain-marie, rapidement séchés et pesés, puis leur contenu est passé sur un filtre en cellulose reposant sur un pied gradué de 500 ml. Le volume du filtrat est noté suivant le temps.

Lorsque la filtration est achevée, on mesure la densité de chaque moût ainsi obtenu, ce qui permet de calculer le rendement d'extrait (pourcentage des matières solubles contenues dans les grains effectivement mises en solution dans le moût) ainsi que sa couleur sur l'échelle élaborée à cet effet par la "European Brewing Convention" (EBC).

Afin de mesurer la fermentabilité du moût (atténuation limite), 100 ml de moût sont alors prélevés et mélangés stérilement dans une bouteille avec 20 ml d'une suspension de levures de brasserie.

Dans cet exemple, chaque expérience est réalisée deux fois et des mesures identiques sont également effectuées sur un mout n'ayant pas été mis en contact avec des fibres afin de servir de contrôle.

### 2) Résultats

Les résultats obtenus sont reportés dans le tableau V ci-après :

**TABLEAU V**

| Quantité de fibres (% en poids) | Densité (g/100 g) | Rendement d'extrait (%) | Couleur (EBC) | Atténuation limite (%) |
|---|---|---|---|---|
| 0 (Contrôle) | 18,9 | 74,72 | 12 | 86,67 |
| 0,5 | 18,7 | 74,92 | 12 | 86,63 |
| 1 | 18,2 | 74,53 | 12 | 86,26 |
| 2 | 18,2 | 74,76 | 12 | 85,27 |
| 5 | 17,7 | 76,61 | 13 | 86,72 |
| 10 | 17,9 | 78,57 | 14 | 87,93 |
| 15 | 17,1 | 81,35 | 14,5 | 85,50 |

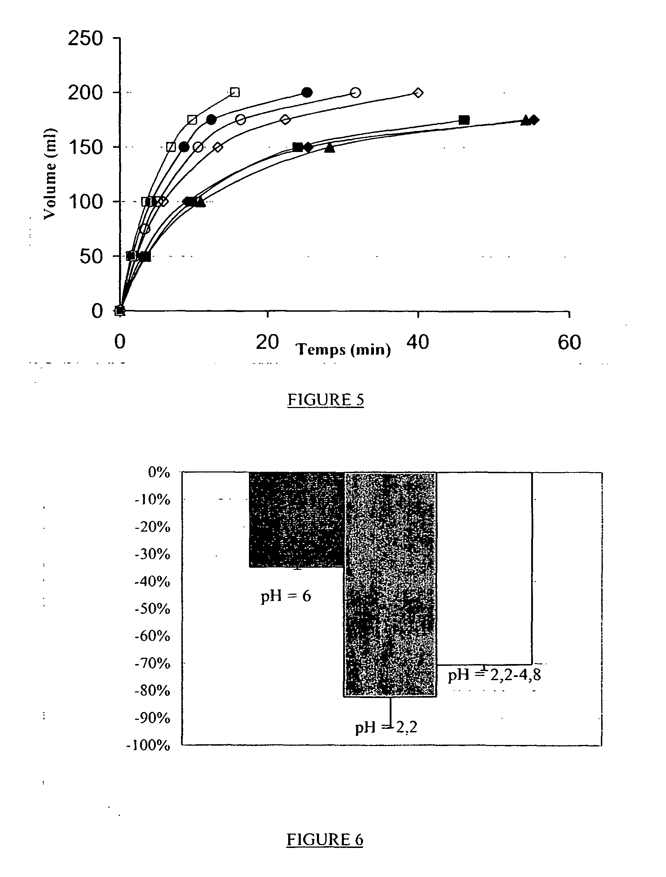

La figure 5 annexée représente la quantité de filtrat récupérée en ml en fonction du temps en minutes pour les différentes doses de fibres ajoutées (Contrôle (0 %) : carrés pleins ; 0,5 % : losanges pleins ; 1 %: triangles pleins ; 2 %: losanges vides ; 5 %: ronds vides ; 10 % : ronds pleins ; 15 % carrés vides).

Ces résultats montrent que la filtration est aussi grandement avantagée par l'addition de fibres. Par ailleurs, il est important de remarquer que l'intégration du procédé de décontamination conforme à la présente Invention dans un processus brassicole n'a aucune influence négative sur son déroulement et en particulier sur la fermentabilité du moût (atténuation limite).

## EXEMPLE 5 : ETUDE DE L'EFFET DU pH SUR L'ADSORPTION DES MYCOTOXINES PAR DES FIBRES DE BLE

Afin d'étudier l'impact du pH, une expérience en milieu modèle a été réalisée, consistant en la mesure de l'adsorption avant et après une descente puis une remontée du pH.

**1) Protocole expérimental :**

Une quantité connue de fibres Adfimax® BW correspondant à la concentration de 20 g de fibres/l est mélangée dans un tube stérile de 50 ml à 25 ml de milieu modèle DYP tel que décrit ci-dessus à l'exemple 1, préalablement contaminé à 50 ng d'OTA/ml au moyen d'une solution d'OTA dans de l'éthanol. Le pH du milieu est mesuré à 6.
Le contenu du tube est alors incubé, séparé, extrait, purifié et analysé comme décrit ci-dessus à l'exemple 1.
Parallèlement, le pH de ce même DYP est, dans deux autres tubes déjà garnis de fibres, abaissé jusqu'à une valeur de 2,2 par ajout d'acide lactique solide. Le contenu d'un des deux tubes est alors incubé, séparé, extrait, purifié et analysé comme décrit ci-dessus à l'exemple 1.
Le pH du milieu dans le deuxième tube est alors remonté à 4,8 par ajout de granules d'hydroxyde de sodium. Le contenu du tube est alors incubé, séparé, extrait, purifié et analysé comme dans l'exemple 1.
Chaque expérience est effectuée trois fois.

**2) Résultats :**

Les résultats obtenus sont reportés sur la figure 6 annexée qui représente l'évolution de l'adsorption de l'OTA (diminution de la quantité d'OTA dans le milieu DYP en % de la quantité initialement présente) sur les fibres après la descente et après la remontée du pH dans le milieu DYP. Sur cette figure, la barre noire correspond aux mesures effectuées à pH 6, la barre hachurée aux mesures effectuées à pH 2,2 et la barre blanche aux mesures effectuées après remontée du pH de 2,2 à 4,8.
Il est manifeste que plus le pH est bas, plus l'adsorption de l'OTA par les fibres est forte, atteignant même pour un pH de 2,2 un pourcentage d'adsorption de 82,4 %. Le relargage de la toxine lors de la remontée du pH ne semble pas être aussi fort que l'augmentation de l'adsorption lors de l'abaissement du pH.
La diminution du pH permet donc, pour une même quantité de fibres, d'augmenter de façon considérable la quantité d'OTA adsorbée par ces fibres.

**EXEMPLE 6 : MISE EN EVIDENCE DE L'ADSORPTION DE L'OTA SUR DES FIBRES VEGETALES DANS DU JUS DE RAISIN.**

**1) Protocole expérimental :**

Une quantité pesée de fibres Adfimax® BW est mélangée à 25 ml de jus de raisin acheté dans le commerce et préalablement contaminé à raison de 400 ng d'OTA/1 de jus de raisin, au moyen de moût naturellement contaminé par de l'OTA. Le poids de fibres est calculé afin de correspondre aux concentrations de 20 et 50 g de fibres/1 de jus de raisin.
Les tubes sont ensuite mélangés, purifiés, extraits et analysés par HPLC comme décrit ci-dessus à l'exemple 2.
Un traitement contrôle (sans fibre) est mené parallèlement et chacun des traitements est effectuée trois fois.

**2) Résultats**

Les résultats concernant la diminution de la quantité d'OTA contenue dans le jus de raisin suivant la dose de fibres ajoutée sont reportés dans le tableau VI ci-après :

**TABLEAU VI**

| Dose de fibre (g/l) | Pourcentage d'adsorption |
|---|---|
| 20 | 74±1,8% |
| 50 | 84,8±2,4 % |

Ces résultats montrent que la mise en contact de jus de raisin avec ces fibres conduit à une bonne diminution de la concentration en OTA. Le pourcentage d'adsorption est très élevé, cela pouvant être attribué en partie à l'acidité du jus de raisin.

**EXEMPLE 7 : MISE EN EVIDENCE DE L'ADSORPTION DES AFLATOXINES B1 PAR DES FIBRES VEGETALES INSOLUBLES**

Une quantité déterminée de fibres végétales (Adfimax® BW : 20 g/l est introduite dans un tube stérile de 50 ml et mélangée avec 25 ml de tampon phosphate à pH 7 (PBS), préalablement contaminé par les aflatoxines B1 (environ 8,5 ppb). Après homogénéisation manuelle pendant 30 secondes, le tube est placé à agiter à 90 tours par minutes dans une chambre thermostatée à 25°C pendant 45 minutes. Un traitement contrôle sans adsorbant a servi de témoin.

A l'échéance, la suspension est ensuite centrifugée à 1830g pendant 10 minutes à 25°C, puis le culot est séparé du surnageant. L'essai est réalisé trois fois.

Les aflatoxines B1 (initiales et résiduelles) sont analysées par une méthode immunochimique ELISA de compétition directe à l'aide du test spécifique quantitatif à haute sensibilité vendu sous la dénomination commerciale Veratox® HS par la société Neogen Corporation (USA). Le protocole préconisé par le fournisseur de ce test a été utilisé.

Ce test immunochimique (ELISA) a été réalisé de manière suivante :

- dépôt de 100 $\mu$l de conjugué dans chaque micropuits non tapissé d'anticorps ;
- ajout de 100 $\mu$l de standard ou de 100 $\mu$l d'échantillon et mélange ;
- prélèvement de tout le mélange et son dépôt dans un micropuits tapissé d'anticorps ;
- incubation pendant 10 minutes à température ambiante ;
- lavage cinq fois avec de l'eau désionisée ;
- dépôt de 100 $\mu$l de substrat ;
- incubation pendant 10 minutes à la température ambiante ;
- ajout de 100 $\mu$l de solution "Red Stop" fournie avec le test pour arrêter la réaction substrat-enzyme.

En parallèle, on réalise la même expérience à pH 3 dans un milieu PBS (dont le pH a été ajusté à 3 avec de l'acide lactique) ainsi qu'une courbe d'étalonnage avec des standards.

La densité optique des colorations est ensuite lue à une longueur d'onde de 620 nm à l'aide d'un lecteur de microplaque vendu sous la dénomination commerciale Labsystem Multiscan MCC/340-RS232C (Labsystems, Finlande).

La limite de détection et la limite de quantification de cette méthode analytique sont respectivement estimées à 3 et 10 ppt alors que le pourcentage de récupération est de 100 %

Les résultats de cet essai sont présentés dans le Tableau VII ci-après :

**TABLEAU VII**

| Durée de mise en contact (min) | Aflatoxines B1 adsorbées à pH 7 (%) | Aflatoxines B1 adsorbées à pH 3 (%) |
|---|---|---|
| 0 | 0 | 0 |
| 5 | 66 | 72 |
| 25 | 68 | 69 |
| 45 | 68 | 70 |
| 120 | 67 | 74 |

Ces résultats montrent que (Adfimax® BW permet d'adsorber une grande quantité d'aflatoxines B1, et ce dès 5 minutes de contact, à pH neutre comme à pH acide.

**EXEMPLE 8 ETUDE DE L'IMPACT DE LA MICRONISATION DE DIFFERENTES FIBRES VEGETALES INSOLUBLES SUR LA QUANTITE D'AFB1 ADSORBEE**

Cet exemple a pour but d'étudier *in vitro* l'impact de la micronisation de différentes fibres végétales insolubles sur la quantité d'aflatoxine B1 (AFB1) adsorbée.

Dans cet exemple, les fibres suivantes ont été utilisées :

- Fibres de blé non micronisées (Adfimax® 48 y) et micronisées (Adfimax® BW),
- Bale d'avoine (Adfimax® 82 y) et fibres d'avoine micronisées (Adfimax® 82),
- Fibres d'orge medium (Adfimax® 76 "m") et micronisées (Adfimax® 76),
- Fibres de pomme medium (Adfimax® 75 "m") et micronisées (Adfimax® 75).

Cette étude a été réalisée dans un milieu modèle constitué par 25 ml de solution de PBS à un pH = 3 (25 ml par flacon), chaque flacon étant contaminé par environ 8 ppb d'AFB1. Les fibres végétales sont ensuite introduites dans le milieu contaminé à raison de 20 g/l. Chaque flacon est stocké en chambre noire à une température de 25°C sur une table agitante pendant 45 minutes. Ils sont ensuite centrifugés à 3000 t/min à 25°C pendant 10 minutes. Le surnageant est alors récupéré de manière à arrêter l'adsorption de l'AFB1 par les fibres et la concentration d'AFB1 résiduelle (c'est-à-dire non adsorbée) est dosée dans chacun des surnageant par un test ELISA ("Veratox® for Aflatoxin HS" vendu par la société Neogen Corporation, USA). Chacune de ces expériences est réalisée trois fois.

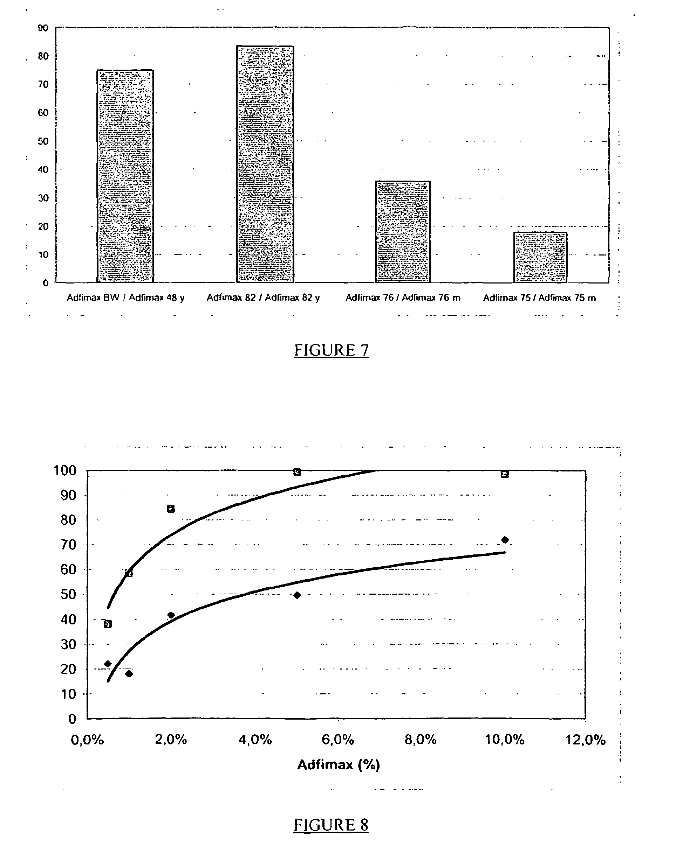

Les résultats obtenus sont reportés sur la figure 7 annexée sur laquelle on représente l'augmentation de la quantité de mycotoxine adsorbée par des fibres micronisées (en %) par rapport aux fibres non micronisées de même origine et par des fibres micronisées (en %) par rapport aux fibres medium de même origine.

Cette figure montre, qu'au sein des adsorbants biologiques, le traitement de micronisation a un effet très positif sur l'adsorption. Elle montre également que plus le produit est fin plus il adsorbe.

Par ailleurs, parmi les fibres micronisées, on constate que les fibres d'avoine micronisées permettent l'adsorption totale de l'AFB1, mettant ainsi en évidence l'efficacité remarquable des adsorbants naturels conformes à l'Invention.

## EXEMPLE 9 ETUDE DE L'EFFET DOSE-REPONSE LORS DE L'ADSORPTION DE L'AFB1 PAR DES FIBRES DE BLE MICRONISEES OU NON MICRONISEES

Le but de cet exemple est de déterminer à partir de quelle dose les fibres de blé micronisées (Adfimax® BW) et non micronisées (Adfimax® 48 y), adsorbent la même quantité d'AFB1.

L'expérience a été réalisée dans du tampon PBS à pH 3 (le pH étant ajusté avec de l'acide lactique). Le tampon PBS a initialement été contaminé à une teneur d'environ 8 ppb d'AFB1.

L'effet dose réponse-réponse a été évalué pour des doses de 0,5 %, 1 %, 2 %, 5 % et 10 % en poids de chacune des deux fibres étudiées ; le dosage de l'AFB 1 étant réalisé comme décrit ci-dessus à l'exemple 8.

Les résultats obtenus sont représentés sur la figure 8 annexée sur laquelle l'adsorption d'AFB1, exprimée en pourcentage de réduction de la concentration d'AFB1 dans le surnageant par rapport à la concentration initialement présente, est fonction de quantité de fibres utilisées (en % pondéral) ; les carré noirs correspondent aux fibres de blé micronisées, les losanges noirs correspondent aux fibres de blé non micronisées.

Ces résultats montrent que les fibres de blé micronisées sont nettement plus performantes vis-à-vis de l'adsorption de l'AFB1.

D'un point de vue commercial, il est intéressant de remarquer que la dose de 0,75 % de fibres de blé micronisées a le même effet que la dose de 5 % de la même fibre non micronisée. Ces quantités adsorbent, toutes deux, 50 % d'AFB1 du milieu modèle à pH 3 contaminé initialement à environ 8 ppb. Par conséquent, l'utilisation de fibres végétales micronisées présente un grand intérêt commercial dans la mesure où cela permet de diminuer la quantité de matière première nécessaire à l'adsorption d'une quantité de mycotoxines donnée.

## EXEMPLE 10 : CONFIRMATION DE L'ADSORPTION DE L'OTA AU COURS D'UN PROCESSUS BRASSICOLE PILOTE

### 1) Protocole expérimental :

3 brassins ont été réalisés sur une brasserie pilote : un brassin témoin et deux brassins dans lesquels on a ajouté de l'Adfimax® BW à une dose de 10 % en poids par rapport au malt.

Les conditions expérimentales sont résumées dans le Tableau VIII ci-après :

**TABLEAU VIII**

|  | Brassin témoin | Brassin A1 (avec Adfimax® BW) | Brassin A2 (avec Adfimax® BW) |
|---|---|---|---|
| Quantité de malt (kg) | 40 | 40 | 40 |
| Quantité d'Adfimax® BW (kg) | 0 | 4 | 4 |
| Quantité d'eau (en litre) | 140 | 140 | 140 |

### 2) Résultats :

Les résultats obtenus sont présentés dans le Tableau IX ci-après :

TABLEAU IX

|  | Brassin témoin | Brassin A1 | Brassin A2 |
|---|---|---|---|
| Quantité totale d'OTA dans la bière ($\mu$g/lot) | 8,66 | 1,44 | 1,96 |

On observe donc une réduction de la contamination totale en OTA dans la bière finale d'environ 80 %.

### EXEMPLE 11 : MISE EN EVIDENCE DE L'ADSORPTION DE L'OTA SUR DES FIBRES DE RAISINS DANS UN MILIEU MODELE

#### 1) Protocole expérimental :

Le milieu modèle synthétique DYP contaminé a préalablement été traité de la même manière que dans l'exemple 1 ci-dessus. Le DYP a été contaminé en OTA à une valeur d'environ 45 ng/ml.
Dans cet exemple, deux sortes de fibres de raisin micronisées ont été testées : des fibres de pépins de raisin micronisées vendues sous la dénomination commerciale Adfimax® 64 et des fibres de pulpes de raisin micronisées vendues sous la dénomination commerciale Adfimax® 59.
Les fibres utilisées ont été introduites dans le milieu contaminé à raison de 20 g/l.
Pour chacune des deux fibres testées, l'expérience a été menée à pH 6,3 (milieu DYP normal) ainsi qu'à un pH de 4,5 correspondant au milieu DYP normal dont le pH à été ajusté à 4,5 avec de l'acide lactique.
Le temps de contact du milieu contaminé avec les fibres a été de 45 minutes.
La quantité d'OTA résiduelle dans le milieu a été déterminée comme indiqué ci-dessus à l'exemple 1.

#### 2) Résultats :

Les résultats concernant le pourcentage d'adsorption d'OTA sont reportés dans le Tableau X ci-après :

TABLEAU X

| Nature de fibres utilisées | Adsorption de l'OTA à pH 6,3 (en %) | Adsorption de l'OTA à pH 4,5 (en %) |
|---|---|---|
| Fibres de pépins de raisin | 7 | 30 |
| Fibres de pulpes de raisins | 35 | 68 |

Ces résultats montrent que le pourcentage d'adsorption de la fibres de pulpes de raisins vis-à-vis de l'OTA est très élevé, ce qui est très intéressant d'un point de vue commercial puisque le procédé conforme à l'Invention peut être appliqué à la décontamination en mycotoxines du vin ou du jus de raisin.

**Revendications**

1. Procédé biologique de décontamination des mycotoxines dans un milieu alimentaire liquide, **caractérisé par le fait qu'**il comprend au moins les étapes suivantes :

   - l'adsorption d'au moins une partie des mycotoxines présentes dans le milieu alimentaire liquide à décontaminer par mise en contact dudit milieu avec des fibres végétales insolubles micronisées, et
   - l'élimination desdites fibres sur lesquelles les mycotoxines sont adsorbées.

2. Procédé selon la revendication 1, **caractérisé par le fait que** les fibres végétales insolubles sont des fibres issues :

   - de végétaux alimentaires choisis parmi les céréales, les légumineuses, les plantes potagères, et les fruits y compris tropicaux ;
   - de végétaux issus de l'industrie du papier choisis parmi les arbres, la canne à sucre, le bambou et la paille de céréales.

3. Procédé selon la revendication 2, **caractérisé par le fait que** les fibres issues de végétaux alimentaires sont des fibres issues de céréales et sont choisies parmi les fibres de blé, d'orge, d'avoine, de maïs, de millet, de riz, de seigle, de sorgho, et leurs équivalents maltés.

4. Procédé selon la revendication 2, **caractérisé par le fait que** les fibres végétales insolubles sont choisies parmi les fibres issues des pommes, des poires, des grains de raisins, des graines de lupin et de soja, des tomates, des pois et du café.

5. Procédé selon l'une quelconque des revendications précédentes, **caractérisée par le fait que** les fibres se présentent sous la forme de microparticules dont au moins 90 % de la masse totale des microparticules présentent une taille inférieure ou égale à 700 µm.

6. Procédé selon la revendication 5, **caractérisé par le fait que** les fibres se présentent sous la forme de microparticules dont au moins 90 % de la masse totale des microparticules présentent une taille inférieure ou égale à 200 µm.

7. Procédé selon l'une quelconque des revendications précédentes, **caractérisé par le fait qu'**il comprend en outre une étape préliminaire au cours de laquelle les fibres sont hydratées.

8. Procédé selon l'une quelconque des revendications précédentes, **caractérisé par le fait que** la quantité de fibres végétales introduite dans le milieu liquide à décontaminer est comprise entre 0,1 et 20 % en poids par litre de milieu.

9. Procédé selon l'une quelconque des revendications précédentes, **caractérisé par le fait que** la mise en contact du milieu alimentaire avec les fibres végétales est réalisée pendant une durée comprise entre quelques secondes et 90 minutes.

10. Procédé selon l'une quelconque des revendications précédentes, **caractérisé par le fait que** la mise en contact du milieu alimentaire avec les fibres végétales est réalisé à un pH compris entre 1,5 et 7.

11. Procédé selon l'une quelconque des revendications précédentes, **caractérisé par le fait que** le milieu est maintenu à une température comprise entre 7 et 80°C pendant toute la durée de la mise en contact.

12. Procédé selon l'une quelconque des revendications précédentes, **caractérisé par le fait que** le milieu est choisi parmi la bière, les mélanges de malt et d'eau et la maische des processus brassicoles, le vin, le café, les jus de fruits, le lait et les sirops de glucose.

13. Procédé selon l'une quelconque des revendications précédentes, **caractérisé par le fait que** l'élimination des fibres à la fm de la période de mise en contact est réalisée par filtration.

14. Procédé selon l'une quelconque des revendications précédentes, **caractérisé par le fait que** les étapes de mise en contact du milieu alimentaire liquide à décontaminer avec les fibres végétales insolubles d'une part et d'élimination desdites fibres sur lesquelles les mycotoxines sont adsorbées d'autre part sont réalisées simultanément.

15. Procédé selon la revendication 14, **caractérisé par le fait que** l'étape d'élimination des fibres est une étape de filtration et que les fibres végétales insolubles font partie intégrante d'un système de filtration.

16. Utilisation du procédé tel que défini à l'une quelconque des revendications 1 à 15, pour la détoxication de la bière au cours d'un procédé brassicole, ledit procédé brassicole faisant intervenir au moins une opération de filtration.

17. Procédé brassicole comprenant au moins une étape de brassage et au moins une étape de fermentation d'un moût, **caractérisé par le fait qu'**il comporte en outre au moins une étape de décontamination en mycotoxines selon le procédé tel que défini à l'une quelconque des revendications 1 à 15, ladite étape de décontamination ayant lieu simultanément à l'étape de brassage et/ou après l'étape de fermentation et/ou de maturation du moût.

18. Procédé selon la revendication 17, **caractérisé par le fait que** l'étape de décontamination est réalisée simultanément à l'étape de brassage, par mise en contact d'un mélange de malt moulu et d'eau avec des fibres végétales insolubles, l'élimination desdites fibres sur lesquelles les mycotoxines sont alors adsorbées étant réalisée par l'étape de filtration de la maische à la fin du brassage.

19. Procédé selon la revendication 18, **caractérisé par le fait que** les fibres végétales sont introduites à raison de 0,5 à 20 % en poids par rapport au poids de malt.

20. Procédé selon la revendication 13, **caractérisé par le fait que** l'étape de mise en contact du milieu liquide à décontaminer est réalisée avant l'étape de filtration d'un moût fermenté et éventuellement maturé, par mise en contact de ce moût avec des fibres végétales insolubles, l'élimination desdites fibres sur lesquelles les mycotoxines sont alors adsorbées étant réalisée par l'étape de filtration du moût fermenté.

21. Procédé selon la revendication 20, **caractérisé par le fait que** les fibres végétales sont introduites dans le moût fermenté à raison de 0,05 à 5 % en poids par rapport au poids total du moût.

**Claims**

1. A biological process for decontaminating mycotoxins in a liquid dietary medium, **characterized in that** it comprises at least the following steps:

   - adsorbing at least a part of the mycotoxins present in the liquid dietary medium to be decontaminated, by bringing said medium into contact with micronized insoluble plant fibers, and
   - removing said fibers on which the mycotoxins are adsorbed.

2. The process as claimed in claim 1, **characterized in that** the insoluble plant fibers are fibers derived from:

   - dietary plants selected from cereals, leguminosae, vegetables and fruits including tropical fruits;
   - plants derived from the paper industry and selected from trees, sugarcane, bamboo and cereal straw.

3. The process as claimed in claim 2, **characterized in that** the fibers derived from dietary plants are fibers derived from cereals and are selected from wheat, barley, oat, corn, millet, rice, rye and sorghum fibers and their malted equivalents.

4. The process as claimed in claim 2, **characterized in that** the insoluble plant fibers are selected from fibers derived from apples, pears, grape berries, lupin and soya bean seeds, tomatoes, peas and coffee.

5. The process as claimed in any of the preceding claims, **characterized in that** the fibers are present in the form of microparticles at least 90% of the total mass of which has a size of less than or equal to 700 $\mu$m.

6. The process as claimed in claim 5, **characterized in that** the fibers are present in the form of microparticles at least 90% of the total mass of which has a size of less than or equal to 200 $\mu$m.

7. The process as claimed in any one of the preceding claims, **characterized in that** it additionally comprises a preliminary step during which the fibers are hydrated.

8. The process as claimed in any one of the preceding claims, **characterized in that** the quantity of plant fibers introduced into the liquid medium to be decontaminated is between 0.1 and 20% by weight per liter of medium.

9. The process as claimed in any one of the preceding claims, **characterized in that** the bringing into contact of the dietary medium with the plant fibers is carried out for a period of between a few seconds and 90 minutes.

10. The process as claimed in any one of the preceding claims, **characterized in that** the bringing into contact of the dietary medium with the plant fibers is carried out at a pH of between 1.5 and 7.

11. The process as claimed in any one of the preceding claims, **characterized in that** the medium is maintained at a temperature of between 7 and 80°C during the whole of the period of contact.

12. The process as claimed in any one of the preceding claims, **characterized in that** the medium is selected from beer, mixtures of malt and water and the mash of the brewing processes, wine, coffee, fruit juices, milk and glucose syrups.

13. The process as claimed in any one of the preceding claims, **characterized in that** the fibers are removed by filtration at the end of the period of contact.

**14.** The process as claimed in any one of the preceding claims, **characterized in that** the steps of bringing the liquid dietary medium to be decontaminated into contact with the insoluble plant fibers, on the one hand, and, on the other hand, of removing said fibers on which the mycotoxins are adsorbed are carried out simultaneously.

**15.** The process as claimed in claim 14, **characterized in that** the step of removing the fibers is a step of filtration and **in that** the insoluble plant fibers form an integral part of a filtration system.

**16.** The use of the process as defined in any one of claims 1 to 15 for detoxifying beer during a brewing process, with said brewing process involving at least one filtration operation.

**17.** A brewing process comprising at least one step of mashing and at least one step of fermenting a wort, **characterized in that** it additionally comprises at least one step of mycotoxin decontamination using the process as defined in any one of claims 1 to 15, with said decontamination step taking place simultaneously with the mashing step and/or after the step of fermenting and/or maturing the wort.

**18.** The process as claimed in claim 17, **characterized in that** the decontamination step is carried out simultaneously with the mashing step by bringing a mixture of ground malt and water into contact with insoluble plant fibers, the removing of said fibers on which the mycotoxins are then adsorbed being carried out by the step of filtering the mash at the end of the mashing.

**19.** The process as claimed in claim 18, **characterized in that** the plant fibers are introduced in an amount of from 0.5 to 20% by weight based on the weight of malt.

**20.** The process as claimed in claim 13, **characterized in that** the step of bringing the liquid medium to be decontaminated into contact is carried out before the step of filtering a wort which is fermented and, where appropriate, matured, by bringing this wort into contact with insoluble plant fibers, with said fibers on which the mycotoxins are then adsorbed being removed by the step of filtering the fermented wort.

**21.** The process as claimed in claim 20, **characterized in that** the plant fibers are introduced into the fermented wort in an amount of from 0.05 to 5% by weight based on the total weight of the wort.

**Patentansprüche**

**1.** Biologisches Verfahren zur Dekontamination von Mykotoxinen in einem flüssigen alimentären Medium, **dadurch ge** - **kennzeichnet,** dass es wenigstens die folgenden Stufen umfasst:

- Adsorption wenigstens eines Teils der Mykotoxine, die in dem zu dekontaminierenden flüssigen alimentären Medium vorhanden sind, durch Inkontaktbringen des Mediums mit mikronisierten unlöslichen pflanzlichen Fasern und
- Entfernung der genannten Fasern, auf denen die Mykotoxine adsorbiert sind.

**2.** Verfahren nach Anspruch 1, **dadurch gekennzeichnet, dass** die unlöslichen pflanzlichen Fasern Fasern sind, hervorgegangen aus:

- alimentären Pflanzen, ausgewählt unter den Cerealien, den Leguminosen, den Gemüsepflanzen und den Früchten, einschließlich tropische;
- aus der Papierindustrie hervorgegangene Pflanzen, ausgewählt unter den Bäumen, dem Zuckerrohr, dem Bambus und dem Getreidestroh.

**3.** Verfahren nach Anspruch 2, **dadurch gekennzeichnet, dass** die aus alimentären Pflanzen hervorgegangenen Fasern aus Cerealien hervorgegangene Fasern sind und ausgewählt sind unter den Fasern von Weizen, Gerste, Hafer, Mais, Hirse, Reis, Roggen, Sorghum und ihren gemälzten Äquivalenten.

**4.** Verfahren nach Anspruch 2, **dadurch gekennzeichnet, dass** die unlöslichen pflanzlichen Fasern ausgewählt sind unter den Fasern, hervorgegangen aus Äpfeln, Birnen, Beeren von Trauben, Samen von Lupine und von Soja, Tomaten, Erbsen und Kaffee.

5. Verfahren nach einem der vorstehenden Ansprüche, **dadurch gekennzeichnet, dass** die Fasern in Form von Mikropartikeln vorliegen, wobei wenigstens 90% der gesamten Masse der Mikropartikel eine Größe kleiner als oder gleich 700 $\mu$m aufweisen.

6. Verfahren nach Anspruch 5, **dadurch gekennzeichnet, dass** die Fasern in Form von Mikropartikeln vorliegen, wobei wenigstens 90% der gesamten Masse der Mikropartikel eine Größe kleiner als oder gleich 200 $\mu$m aufweisen.

7. Verfahren nach einem der vorstehenden Ansprüche, **dadurch gekennzeichnet, dass** es außerdem eine Vorstufe umfasst, während der die Fasern entwässert werden.

8. Verfahren nach einem der vorstehenden Ansprüche, **dadurch gekennzeichnet, dass** die Menge an pflanzlichen Fasern, die in das zu dekontaminierende flüssige Medium eingebracht wird, zwischen 0,1 und 20 Ges.-% pro Liter Medium liegt.

9. Verfahren nach einem der vorstehenden Ansprüche, **dadurch gekennzeichnet, dass** das Inkontaktbringen des alimentären Mediums mit den pflanzlichen Fasern während einer Zeitdauer durchgeführt wird, die zwischen einigen Sekunden und 90 Minuten liegt.

10. Verfahren nach einem der vorstehenden Ansprüche, **dadurch gekennzeichnet, dass** das Inkontaktbringen des alimentären Mediums mit den pflanzlichen Fasern bei einem pH, der zwischen 1,5 und 7 liegt, durchgeführt wird.

11. Verfahren nach einem der vorstehenden Ansprüche, **dadurch gekennzeichnet, dass** das Medium bei einer Temperatur, die zwischen 7 und 80°C liegt, während der gesamten Dauer des Inkontaktbringens gehalten wird.

12. Verfahren nach einem der vorstehenden Ansprüche, **dadurch gekennzeichnet, dass** das Medium ausgewählt ist unter Bier, den Gemischen von Malz und von Wasser und der Maische von Brauverfahren, dem Wein, dem Kaffee, den Fruchtsäften, der Milch und den Glukosesirupen.

13. Verfahren nach einem der vorstehenden Ansprüche, **dadurch gekennzeichnet, dass** die Entfernung der Fasern am Ende der Dauer des Inkontaktbringens mittels Filtration durchgeführt wird.

14. Verfahren nach einem der vorstehenden Ansprüche, **dadurch gekennzeichnet, dass** die Stufen des Inkontaktbringens des zu dekontaminierenden flüssigen alimentären Mediums mit den unlöslichen pflanzlichen Fasern einerseits und der Entfernung der genannten Fasern, auf denen die Mykotoxine adsorbiert sind, andererseits simultan durchgeführt werden.

15. Verfahren nach Anspruch 14, **dadurch gekennzeichnet, dass** die Stufe der Entfernung von Fasern eine Stufe der Filtration ist und dass die unlöslichen pflanzlichen Fasern integraler Bestandteil eines Filtrationssystems sind.

16. Verwendung des Verfahrens, wie es in einem der Ansprüche 1 bis 15 definiert ist, zur Entgiftung des Bieres im Verlauf eines Brauverfahrens, wobei bei dem Brauverfahren wenigstens ein Filtrationsvorgang eingesetzt wird.

17. Brauverfahren, umfassend wenigstens eine Stufe des Brauens und wenigstens eine Stufe der Fermentation einer Würze,
**dadurch gekennzeichnet dass** es außerdem wenigstens eine Stufe der Dekontamination hinsichtlich Mykotoxinen nach dem Verfahren, wie es in einem der Ansprüche 1 bis 15 definiert ist, umfasst, wobei die Stufe der Dekontamination simultan mit der Stufe des Brauens und/oder nach der Stufe der Fermentation und/oder der Reifung der Würze stattfindet.

18. Verfahren nach Anspruch 17, **dadurch gekennzeichnet, dass** die Stufe der Dekontamination simultan mit der Stufe des Brauens durchgeführt wird mittels Inkontaktbringen eines Gemisches von geschrotetem Malz und von Wasser mit unlöslichen pflanzlichen Fasern, wobei die Entfernung der genannten Fasern, auf denen die Mykotoxine dann adsorbiert sind, durch die Stufe der Filtration der Maische am Ende des Brauens durchgeführt wird.

19. Verfahren nach Anspruch 18, **dadurch gekennzeichnet, dass** die pflanzlichen Fasern in einem Verhältnis von 0,5 bis 20 Ges.-%, bezogen auf das Gewicht an Malz, eingebracht werden.

**20.** Verfahren nach Anspruch 13, **dadurch gekennzeichnet, dass** die Stufe des Inkontaktbringens des zu dekontaminierenden flüssigen Mediums vor der Stufe der Filtration einer fermentierten und gegebenenfalls gereiften Würze durchgeführt wird mittels Inkontaktbringen dieser Würze mit unlöslichen pflanzlichen Fasern, wobei die Entfernung der genannten Fasern, auf denen die Mykotoxine dann adsorbiert sind, mittels der Stufe der Filtration der fermentierten Würze durchgeführt wird.

**21.** Verfahren nach Anspruch 20, **dadurch gekennzeichnet, dass** die pflanzlichen Fasern in einem Verhältnis von 0,05 bis 5 Gew.-%, bezogen auf das gesamte Gewicht der Würze, in die fermentierte Würze eingebracht werden.

FIGURE 1

$$y = 2{,}0848x + 4{,}4696$$
$$R^2 = 0{,}8786$$

FIGURE 2

FIGURE 3

FIGURE 4

FIGURE 5

FIGURE 6

FIGURE 7

FIGURE 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5248382 A
- DE 3810004
- WO 02052950 A
- WO 0240150 A
- WO 9834503 A
- EP 0124891 A
- FR 2433910

**Littérature non-brevet citée dans la description**

- International Conference on Nutrition. *Conférence Internationale sur la Nutrition,* 1992
- World Food Summit. *Sommet Mondial sur l'Alimentation,* 1996
- Preventing Mycotoxin contamination. *FAO,* 1999, (23), 55
- **ABARCA ML. et al.** *J. Food Prot.,* 2001, vol. 64 (6), 903-906
- **WALKER R.** *Adv. Exp. Med. Biol.,* 2002, vol. 504, 249-255
- **PITTET A.** *Revue Méd. Vét.,* 1998, vol. 149, 479-492
- **SCOTT P.M. et al.** *Food Addit. Contam.,* 1995, vol. 12 (4), 591-598
- **SCOTT P.M.** *J. AOAC Int.,* 1996, vol. 79 (4), 875-882
- **SCOTT P.M. et al.** *J AOAC Int.,* 1997, vol. 80 (6), 1229-34
- **NAKAJIMA M. et al.** *J. AOAC Int.,* 1999, vol. 82, 897-902
- Nachweis und Verhalten von Deoxynivalenol und Ochratoxin A während der Bierbereitung. **STETTNER G.** Lehrstuhl für Technologie der Brauerei II. Technische Universität München, 2001
- **WOLF-HALL C.E. et al.** *Adv. Exp. Med. Biol.,* 2002, vol. 504, 217-226
- **TANGNI E.K. et al.** *Food Add. Contam.,* 2002, vol. 19 (12), 1169-1179
- **ODHAV B. et al.** *Food Add. Contam.,* 2002, vol. 19 (1), 55-61